# EUROPÄISCHE PATENTSCHRIFT

(11) **EP 2 230 044 B1**
(45) Veröffentlichungstag und Bekanntmachung des Hinweises auf die Patenterteilung: **23.05.2012**
(21) Anmeldenummer: 10002684.8
(22) Anmeldetag: 15.03.2010
(51) Int. Cl.: B23Q 3/155

(54) **Vorrichtung und Verfahren zur Beförderung von Werkzeugen und Prüfmitteln von Werkzeugmaschinen**
Device and method for transporting tools and inspection equipment for machine tools
Dispositif et procédé de transport d'outils et moyens de vérification de machines-outils

(30) Priorität: 17.03.2009 DE 102009013193
(43) Veröffentlichungstag der Anmeldung: 22.09.2010
(73) Patentinhaber: Neuenhauser Kompressoren GmbH, 49828 Neuenhaus (DE)
(72) Erfinder: Keen, Bernd, 48531 Nordhorn (DE)
(74) Vertreter: Griepenstroh, Jörg

(56) Entgegenhaltungen:
- DE-A1- 3 644 024
- DE-A1- 3 713 868
- DE-A1- 3 816 861
- US-A- 4 110 897
- US-A- 5 927 472
- US-A- 6 071 220

## Beschreibung

Die Erfindung betrifft eine Vorrichtung zum Befördern von Werkzeugen und Prüfmitteln mit den Merkmalen des Patentanspruchs 1 sowie ein Verfahren zur Beförderung von Werkzeugen und Prüfmitteln mit den Maßnahmen des Patentanspruchs 14.

Moderne Werkzeugmaschinen zur spanabhebenden Bearbeitung sind in der Lage, höchstkomplexe Bauteile zu bearbeiten. Entsprechend vielfältig sind dabei die zum Einsatz kommenden Werkzeuge, die in modularer Bauweise an den entsprechenden Produktionsauftrag angepasst werden. Es ist daher notwendig in einem der Werkzeugmaschine zugeordneten, lokalen Magazin diejenigen Werkzeuge, die zur Bearbeitung eines Auftrags notwendig sind, bereitzustellen und in einem bestimmten Umfang Schwesterwerkzeuge identischer Konfiguration vorzuhalten, falls Werkzeuge verschlissen oder beschädigt sind.

Der Maschinenführer muss dafür Sorge tragen, die entsprechenden Werkzeuge rechtzeitig bereitzustellen, indem sie aus einem zentralen Werkzeugmagazin abgeholt und zur Werkzeugmaschine transportiert werden. Der Verbleib des Werkzeugs wird im Werkzeugmagazin protokolliert.

Es wurde jedoch festgestellt, dass die Werkzeuge auch nach Abarbeitung eines Auftrags häufig noch an den jeweiligen Werkzeugmaschinen verbleiben, weil sie von den Maschinenführern noch nicht zurück gebracht worden sind, oder weil das Werkzeug in naher Zukunft für einen weiteren Auftrag benötigt wird und es aus diesem Grunde bei der Werkzeugmaschine gewissermaßen zwischengelagert wird. Die Kosten für die Vielzahl der im Umlauf befindlichen Werkzeuge sind enorm hoch, wobei die Anzahl der vorhandenen Werkzeuge oftmals in einem eklatanten Missverhältnis zu den tatsächlich unter Span stehenden Werkzeugen steht. Auf Grund dieses Missverhältnisses müssen oftmals Werkzeuge neu bestellt oder eingekauft werden, obwohl die entsprechenden Werkzeuge oder Werkzeugteile im Betrieb vorhanden sind aber nicht genutzt werden. Es entstehen ein Überbestand und eine Unübersichtlichkeit von Werkzeugen im gesamten Produktionsbetrieb. Außerdem werden die Werkzeuge auch nicht zeitnah und präventiv gewartet und instand gesetzt bzw. wieder durch multiplen/flexiblen Neuaufbau für andere Anwendungen verfügbar gemacht.

Ein weiterer Nachteil ist, dass die Maschinenführer mit entsprechenden Transportwagen zwischen der Werkzeugausgabe und der Arbeitsmaschine hin und her pendeln. Während dieser Zeit steht der Maschinenführer nicht für seine eigentliche Tätigkeit, nämlich die Führung der Werkzeugmaschine, zur Verfügung. Wertvolle Arbeitszeit verstreicht durch zwar notwendige aber uneffektive Transporte.

Aus der DE 37 13 868 A1 ist eine Lager- und Transporteinrichtung für flexible Fertigungssysteme für die spanabhebende Werkstückbearbeitung bekannt bei der entlang eines Werkzeugregals eine portalartige Führungsbahn verläuft. In Ausnehmungen sind Werkzeuge gehalten und entlang der Führungsbahn ist eine bewegbare Vorrichtung mit einem in horizontaler Ebene verschwenkbaren und an der Führungsbahn längsbewegbaren Arm angeordnet, welcher die Werkzeuge ergreift und zu Werkzeugmaschinen transportiert. Das Werkzeugregal nimmt die Werkzeuge in vertikaler Stellung auf. Aus den Werkzeugregalen heraus werden die Werkzeuge zu einer Übergabestation transportiert und umgekehrt.

Die DE 38 16 861 A1 betrifft eine flexible Fertigungseinrichtung mit mehreren parallel im Abstand nebeneinander angeordneten Bearbeitungsmaschinen. Die Bearbeitungsmaschinen weisen Magazine auf. Die Magazine sind regalartig in zwei Etagen übereinander angeordnet. Die Bearbeitungsmaschinen bleiben auch von der Rückseite her zugänglich, da die unteren Regalreihen Durchgänge aufweisen. Zum Transport der Werkzeuge sind an Transportschienen angeordnete Transportvorrichtungen vorgesehen. Die Werkzeuge sind auch über eine Transportvorrichtung ebenenübergreifend transportierbar.

In der US 4 110 897 A wird eine Vorrichtung zum automatischen Auswechseln von Werkzeugköpfen in einer Arbeitsstation zum Bearbeiten von Werkzeugen beschrieben. Die Vorrichtung weist mindestens einen bewegbaren Werkzeugkopfträger auf. Durch den Werkzeugkopfträger wird ein Werkzeugkopf von einer Beschickungsstation zu einer Arbeitsstation und umgekehrt bewegt. Der Werkzeugkopf ist bezüglich eines feststehenden, zu bearbeitenden Werkzeuges präzise positioniert und ausgerichtet. Auf einer Seite der Beschickungsstation ist eine Zuführstation angeordnet. Auf der anderen Seite der Beschickungsstation ist eine Abgabestation angeordnet. Zum Bewegen des Werkzeugkopfes ist eine erste Einrichtung vorgesehen durch welche der Werkzeugkopf von der Abgabestation zu der Zuführstation bewegbar ist. Weiterhin ist eine zweite Einrichtung zum Bewegen des Werkzeugkopfes vorgesehen durch welche der vom Werkzeugkopfträger getragene Werkzeugkopf ausgetauscht werden kann, indem der Werkzeugkopf von der Beschickungsstation zu der Abgabestation bewegt wird und zugleich ein anderer Werkzeugkopf von der Zuführstation zu der Beschickungsstation bewegt wird.

Hiervon ausgehend liegt der Erfindung die Aufgabe zu Grunde, eine Vorrichtung zur Beförderung von Werkzeugen und Prüfmitteln aufzuzeigen, mit welchem die Bereitstellung von Werkzeugen an Maschinen rationalisiert und besser kontrolliert werden kann. Zudem soll ein Verfahren aufgezeigt werden, mit welchem Werkzeuge gezielter und schneller bereitgestellt werden können. Ziel ist es die Anzahl der Werkzeuge auf das notwendige Maß zu reduzieren, um Kosten zu senken.

Der gegenständliche Teil der Aufgabe wird durch die Merkmale des Patentanspruchs 1 gelöst.

Der verfahrensmäßige Teil der Aufgabe wird mit Maßnahmen des Patentanspruchs 14 gelöst.

Vorteilhafte Weiterbildungen sind Gegenstand der abhängigen Unteransprüche.

Der Kerngedanke der Erfindung ist darin zu sehen, dass die Werkzeugtransporte nicht mehr manuell durch die Maschinenführer erfolgen, sondern durch ein geeignetes Transportsystem. Die Erfindung betrifft daher eine Vorrichtung zur Beförderung von Werkzeugen und Prüfmitteln, die über eine zentrale Recheneinheit angesteuert wird. Die Vorrichtung umfasst wenigstens eine Übergabestation, an welcher die Werkzeuge von einem Benutzer abgegeben oder abgeholt werden können sowie eine Transporteinrichtung, über welche ein Transport der Werkzeuge und/oder Prüfmittel zu einer Übergabestation erfolgt. Die Transporteinrichtung ist als Hängeschienensystem ausgeführt, an welchem mehrere Transportgondeln einen Zug bilden. Der mehrere Transportgondeln umfassende Zug ist an einer Laufschiene angeordnet und mit einer Kennzeichnung versehen. Die Transportgondeln dienen der Aufnahme, Beförderung und Bevorratung von Werkzeugen und/oder Prüfmitteln.

Die Kennzeichnungs- und/oder Auslesemittel können mechanisch, optisch oder elektronisch sein. Beispielsweise kann in einfachster Ausführungsform ein Binärcode, eine Nummer oder ein Barcode vorgesehen sein. Es ist aber auch eine Radio-Frequenz-Identifikation (RFID) möglich. Bei der erfindungsgemäßen Vorrichtung sind zumindest an der Übergabestation geeignete Leseeinheiten angeordnet, so dass bestimmbar ist, wo sich welcher Zug befindet. Darüber hinaus ist dem System auch bekannt, welcher Maschinenführer gerade welche Werkzeuge im Einsatz hat. Letztlich müssen aber alle Informationen in maschinenlesbarer Form für eine Steuerungscomputer bereitgestellt werden.

Wesentlich ist somit die mittelbare oder unmittelbare Identifizierung der Werkzeuge oder Prüfmittel, sei es durch unmittelbar an den Werkzeugen oder Prüfmitteln angeordnete Identifikationsmittel oder solche, die den Werkzeugen oder Prüfmitteln nur mittelbar über Werkzeughalter, oder die Werkzeughalter transportierenden Transportmitteln zugeordnet ist.

Der automatische Transport der einzelnen Werkzeuge und/oder Prüfmittel zu den einzelnen Werkzeugmaschinen bzw. zu einer Übergabestation führt zu einer erheblichen Rationalisierung. Wesentlich ist, dass ein Maschinenführer ein Werkzeug oder auch ein zur Durchführung seiner Tätigkeit erforderliches Prüfmittel anfordern kann, ohne den mitunter weiten Weg zu einer zentralen Werkzeugausgabe zurücklegen zu müssen. Die Produktions- bzw. Arbeitsvorbereitung oder auch der Maschinenführer selbst gibt zum Beispiel an einem Terminal auf Grund der zu fertigenden Werkstücke eine genaue Spezifikation vor, an welcher Werkzeugmaschine mit welchen Werkzeugen/Hilfsmitteln gefertigt werden soll. Die Anforderung durch den Maschinenführer kann dezentral über Eingabemodule an Übergabestationen erfolgen. Durch die Anforderung der Werkzeuge kommen die Werkzeuge zum Maschinenführer und nicht umgekehrt. Daher sind die für den Maschinenführer zurückzulegenden Wege erheblich kürzer bzw. entfallen. Er hat dadurch mehr Zeit die Werkzeugmaschine zu führen.

Ein weiterer Vorteil ist, dass zerstörte oder beschädigte Werkzeuge an der Übergabestation abgeben werden können und diese über das erfindungsgemäße Transportsystem direkt zu einem zentralen Werkzeugmagazin transportiert werden können, um dort von einem Werkzeugbauer überarbeitet oder ersetzt zu werden.

Mit Hilfe einer entsprechenden Verwaltungs-Software wird der Werkzeugbauer bzw. das zentrale Werkzeugmagazin darüber informiert, welche Werkzeuge wo und wann an welcher Werkzeugmaschine bereitgestellt werden müssen. Auf Grund dieser Informationen werden die Werkzeuge vom Werkzeugbauer/Werkzeugverwalter für den jeweiligen Auftrag zusammengestellt.

Das erfindungsgemäße Verfahren bzw. die dazu verwendete Vorrichtung setzt voraus, dass alle Werkzeuge, die sich in diesem System befinden, erfasst sind.

Die Werkzeuge sind bevorzugt in Werkzeughaltern angeordnet, die als Mittel zur Aufnahme der Werkzeuge dienen und die mit einer identifizierenden Kennzeichnung versehen sind. Die Identifikation des Werkzeugs erfolgt somit direkt über das Werkzeug oder über den Werkzeughalter. Gleiches gilt für etwaige Prüf- und Hilfsmittel, die in entsprechenden Halterungen transportiert werden können.

Die Werkzeughalter können in als Träger dienenden Transportgondeln des Hängeschienensystems transportiert werden. Die Transportgondeln sind ihrerseits wiederum mit einem Kennzeichen versehen, so dass über die Kennzeichnung der Transportgondeln und die Zuordnung der jeweiligen Werkzeughalter bestimmt werden kann, wo sich welches Werkzeug befindet. All diese Informationen werden in einer zentralen Recheneinheit gespeichert.

Die Vorteile des erfindungsgemäßen Verfahrens bzw. des Transportsystems kommen allerdings erst dann zum Tragen, wenn der Maschinenführer nach Abarbeitung eines Produktionsauftrages, die nicht mehr benötigten Werkzeuge zurück zur Übergabestation bringt, wo die Werkzeuge erfasst werden und zurück zum Werkzeugmagazin gebracht werden. Erst hierdurch kann die Anzahl der im Umlauf befindlichen Werkzeuge reduziert werden. Das setzt allerdings eine Produktionsplanung voraus, bei welcher mit hinreichendem zeitlichen Vorlauf feststeht, wann an einer bestimmten Werkzeugmaschine welches Werkzeug benötigt wird. Ein Werkzeugbauer oder -verwalter in der Werkzeugvorbereitung erfährt daher von dem computergestützten System mit hinreichendem zeitlichen Vorlauf, welche Werkzeuge bereitgestellt werden müssen. Nach der Bereitstellung der entsprechenden Werkzeuge wird ein Zug mit den Werkzeugen bestückt, kann allerdings vor dem Transport zur Übergabestation in der Nähe der Werkzeugmaschine gegebenenfalls zunächst in einem Zwischenspeicher geparkt werden. Erst wenn der Maschinenführer die Werkzeuge tatsächlich benötigt, fordert er den entsprechenden Zug an und bringt gleichzeitig die nicht mehr benötigten Werkzeuge von bereits abgearbeiteten Produktionsaufträgen zurück. Natürlich ist es auch möglich einen Zug bei Bedarf direkt zu einer Übergabestation zu schicken.

Die Flexibilität des erfindungsgemäßen Transportsystems erlaubt eine weit reichende Vernetzung innerhalb der Produktion. Mittels Weichen kann in verschiedene Bereiche abgebogen werden. Die Steuerung sorgt mit Hilfe einer entsprechenden Sensorik dafür, dass Fahraufträge korrekt ausgeführt werden. Durch die Sensorik ist jederzeit nachvollziehbar, wo sich ein Zug gerade befindet.

Für den Fall, dass keine Abzweige notwendig sind, weil zum Beispiel der Maschinenpark entsprechend angeordnet ist, kann bei derartigen geschlossenen Systemen ein kontinuierlich oder diskontinuierlich laufender Kreiskettenförderer eingesetzt werden. Auch hier wird durch die jeweilige Kodierung der Transportgondeln gewährleistet, dass jedes Werkzeug bzw. Prüfmittel an die vorhergesehene Übergabestation bzw. die zugeordnete Werkzeugmaschine gelangt.

Es können auch sogenannten Power & Free-Systeme zum Einsatz kommen. Bei diesem Zweischienensystem läuft in einer oberen Schiene eine Förderkette (Powerkette). In der unteren Schiene, befinden sich die von der Kette geschleppten Transportgondeln. Die Transportgondeln lassen sich von der Powerkette trennen. Dadurch können viele Operationen gesteuert ausgeführt werden. Trotz kontinuierlich laufender Powerkette wird bei diesem System ein ziel- und zeitgesteuerter, diskontinuierlicher Materialfluss möglich.

Es ist im Rahmen der Erfindung auch möglich Transporteinrichtungen als Elektrohängebahn mit einzeln angetriebenen Fahrzeugen zu gestalten. Die Fahrzeuge werden über Schleifleitungen des Hängeschienensystems mit Energie und Steuersignalen versorgt.

Die Übergabestationen sind mit geeigneten Lesegeräten versehen, um eine Verwechslung von Werkzeugen zu vermeiden. An den Übergabestationen sind Speicherelemente, zum Beispiel Schwerkraft-Rollenbahnen oder Speicherförderbänder vorgesehen, die zur Auf- und Abnahme von Werkzeughaltern dienen. Damit lässt sich der Umfang und die Anzahl der Werkzeugvorratsschränke bzw. Werkzeugregale an den jeweiligen Werkzeugmaschinen reduzieren. Es ist im Rahmen der Erfindung auch denkbar, dass die Werkzeuge bzw. Prüfmittel mit Hilfe von jeweiligen Handhabungssystemen automatische Werkzeugwechselmagazine an den jeweiligen Werkzeugmaschinen ver- und entsorgen.

Die einzelnen Züge können theoretisch über einen eigenen Antrieb angetrieben werden. Es wird vor Allem als zweckmäßig ansehen, wenn nicht die Züge, sondern das Schienensystem mit einem Antrieb versehen ist, beispielsweise mit einem Reibrollenantrieb oder einem Kettenförderer. Bei einem Reibrollenantrieb sind die Rollen des Reibrollenantriebs in bestimmten Abständen des Hängeschienensystems angeordnet, so dass ein Zug von Reibrollenantrieb zu Reibrollenantrieb weitergereicht wird. Hierbei müssten nicht ständig alle Reibrollenantriebe in Betrieb sein. Es reicht aus, wenn nur die jeweils im Eingriff mit einem Zug stehenden Reibrollenantriebe eingeschaltet sind. Eine entsprechende Folgesteuerung ist einfach zu realisieren und trägt dazu bei, die Energiekosten zu minimieren. Zudem ist es denkbar in dem Hängeschienensystem Gefällestrecken zu berücksichtigen, über die der Zug ohne motorischen Antrieb rollen kann. Anstelle einzelner Züge kann gegebenenfalls auch ein Kreisförderer vorgesehen sein.

Die Beschickung des Zugs bzw. die Entnahme von Werkzeugen und Werkzeughaltern kann manuell erfolgen oder mit Hilfe einer Handhabungseinrichtung, wie zum Beispiel einem Lift, welcher die Werkzeuge aus dem Zug entnimmt und dem unterhalb des Hängeschienensystems stehenden Maschinenführer übergibt. In gleicher Weise kann umgekehrt eine Beschickung des Zugs mit Werkzeugen erfolgen. Hierbei ist es keineswegs zwingend erforderlich, dass der Werkzeugempfänger auf seine Werkzeuge wartet. Vielmehr ist an der Übergabestation vorzugsweise ein Speicher für ankommende und vorteilhafterweise auch für abzutransportierende Werkzeuge und Prüfmittel vorgesehen. Durch diese Pufferung entstehen dem Werkzeugempfänger weder beim Empfang noch beim Versand der Werkzeuge Wartezeiten.

Damit an einer Übergabestation kein Stau entsteht, kann das Hängeschienensystem mit Parallelschienen bzw. Parallelgleisen versehen sein, um einen Bypass für andere Züge zu schaffen.

Ein weiterer wesentlicher Aspekt der Erfindung ist, dass das erfindungsgemäße Transportsystem auch als Zwischenspeicher genutzt werden kann, in dem nicht nur Werkzeuge bevorratet werden, die einem bestimmten Produktionsauftrag in nächster Zukunft bereitgestellt werden müssen, sondern auch solche, die nur als Reserve vorzuhalten sind. Daher können in einer Art Bevorratungssystem mehrere Schienen nebeneinander und auch übereinander angeordnet sein, um dann zu gegebener Zeit einen Zug aufzurufen, der ein entsprechendes Werkzeug mit sich führt.

Es ist im Rahmen der Erfindung auch denkbar, Mittel vorzusehen, die es ermöglichen, Werkzeuge oder Werkzeughalter außerhalb des Werkzeugmagazins einzelnen Transportgondeln zu entnehmen und anderen Transportgondeln zu übergeben. Ein solches Handhabungssystem ermöglicht es insbesondere aus mehreren Transportgondeln bestehende Züge mit einer geänderten Werkzeug- und Prüfmittelkombination zu bestücken. Beispielsweise können dadurch für einen Auftrag, der priorisiert werden soll, und für den die notwendigen Werkzeuge zumindest teilweise oder sogar vollständig in einem Zwischenspeicher vorrätig sind, ohne manuellen Eingriff des Werkzeugbauers oder Werkzeugverwalters mittels des Handhabungssystems/Wechselsystems die erforderlichen Werkzeuge zusammengestellt werden.Das Verfahren zur Beförderung von Werkzeugen und/oder Prüfmitteln ist in Anspruch 14 definiert.

An der Übergabestation im Werkzeugmagazin kann die Entnahme der beschädigten oder ausgetauschten Werkzeuge erfolgen. Die Verknüpfung zwischen Zug und Transportgondel sowie zwischen Transportgondeln und Werkzeughaltern wird in der zentralen Recheneinheit gelöscht, wobei die Information über den Verbleib der Werkzeuge mit den Werkzeughaltern in der Recheneinheit gespeichert bleibt. Zug und Transportgondel sind jetzt frei und können von neuem mit Werkzeugen und Prüfmitteln bestückt werden. Wird der Zug nach vollständiger Bestückung noch nicht sofort an einer Übergabestation benötigt, so wird er in einen Zwischenspeicher gefahren, in welchem die Züge nebeneinander und/oder übereinander geparkt werden.

Der Vorteil dieses Systems besteht vor allem darin, dass nicht benötigte Werkzeuge bei der Entnahme eines neuen Werkzeugmagazins zur Bearbeitung eines neuen Auftrages durch den Benutzer direkt zurückgegeben werden können ohne dass lange Wege und lange Wegzeiten anfallen. Dadurch befinden sich nur die momentan benötigten Werkzeuge an den Werkzeugmaschinen. Alle anderen Werkzeuge können überprüft, überarbeitet oder ersetzt werden und stehen bei einem neuen Abruf direkt zur Verfügung.

Die Vorteile der erfindungsgemäßen Lösung lassen sich wie folgt zusammenfassen:
- erhebliche Einsparung von Werkzeugen (Kosteneinsparung),
- saubere, übersichtliche und flexible Lagerung von Werkzeugen,
- totale Werkzeug-, Hilfsmittel- und Materiallogistik,
- Verminderung von Wegezeiten der Maschinenführer, höhere Bedienerverfügbarkeit,
- Erhöhung der Maschinenlaufzeiten, höhere Kosteneffizienz und Wettbewerbsfähigkeit,
- zeitnahe, präventive Wartung und Reparatur von Werkzeugen,
- zeitnahe Bereitstellung von Hilfsmitteln, Materialien, wie zum Beispiel Prüfmittel,
- automatische Ver- und Entsorgung von Werkzeugmagazinen.

Die Erfindung wird nachfolgend an einem Beispiel in den Figuren näher erläutert. Es zeigen:
- Figur 1: in einer Draufsicht eine schematische Darstellung eines Produktionsbetriebes mit mehreren Werkzeugmaschinen und mit einem Werkzeugmagazin;
- Figur 2: den Produktionsbetrieb in einer Seitenansicht;
- Figur 3: eine Übergabestation;
- Figur 4: Transportgondeln eines Zuges;
- Figur 5: eine Übergabestation in der Draufsicht und
- Figur 6: das Werkzeugmagazin.

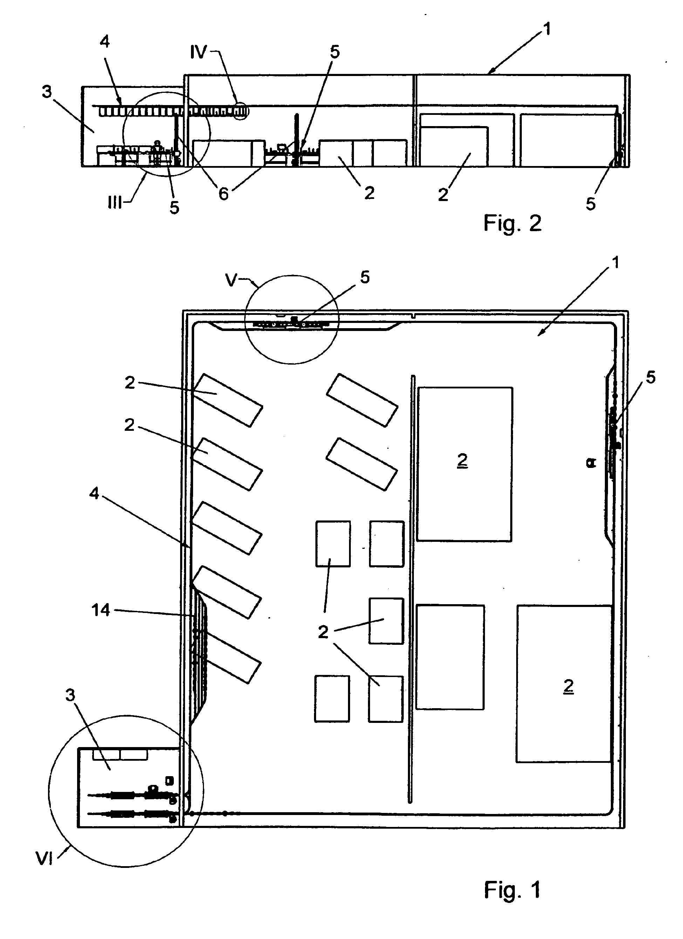

Figur 1 zeigt im Grundriss einen Produktionsbetrieb 1 mit zwei Produktionsbereichen, in denen verschiedene Werkzeugmaschinen 2 angeordnet sind. Links unten in der Figur 1 befindet sich ein Werkzeugmagazin 3. Von dem Werkzeugmagazin 3 ausgehend werden den einzelnen Werkzeugmaschinen 2 die benötigten Werkzeuge zur Verfügung gestellt. Der Transport der Werkzeuge und der ggf. notwendigen Mess- und Prüfmittel erfolgt mittels einer umlaufenden Transporteinrichtung 4 in Form eines Hängeschienensystems. Die Transporteinrichtung 4 ist in der Nähe der Wände montiert und sieht jeweils eine Übergabestation 5 für den in der Bildebene linken sowie für den in der Bildebene rechten Produktionsbereich vor. An den Übergabestationen 5 erfolgt die Entnahme von Werkzeugen bzw. die Rückgabe von benutzten Werkzeugen, die ebenfalls mit der Transporteinrichtung 4 zurück in das Werkzeugmagazin 3 transportiert werden können.

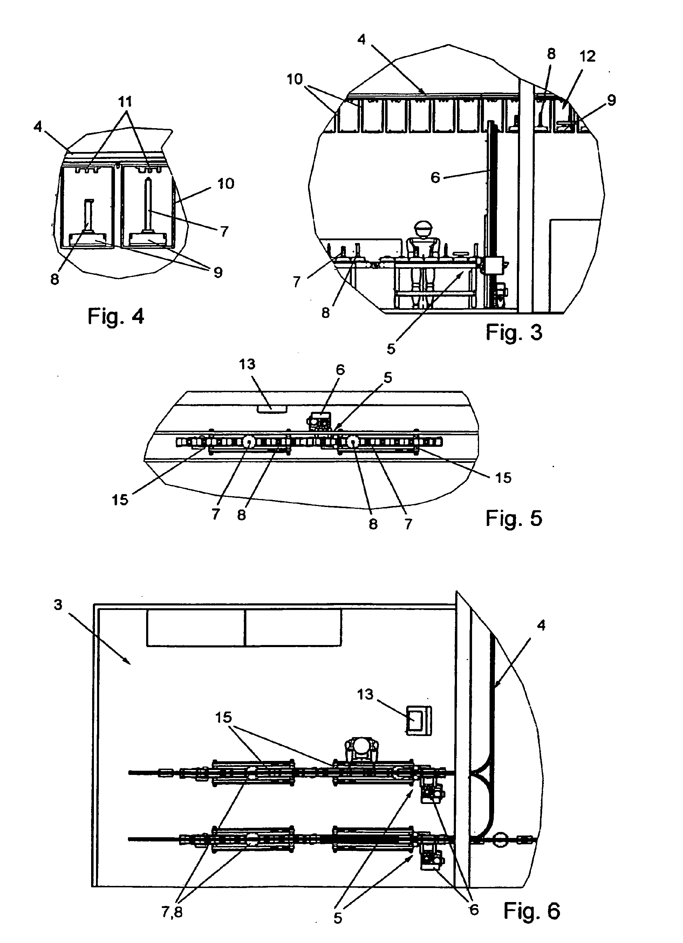

Figur 2 zeigt den Produktionsbetrieb 1 in einer Seitenansicht. Es ist zu erkennen, dass die Transporteinrichtung 4 in relativ großer Höhe montiert ist, so dass an den Übergabestationen 5 aber auch im Werkzeugmagazin 3 als Handhabungseinrichtung ein Lift 6 erforderlich ist, wie er in Figur 3 zu erkennen ist. Mittels dieses Lifts 6 können die Werkzeuge 7, 8 an die Transporteinrichtung 4 übergeben werden.

Figur 4 zeigt in einer Detaildarstellung zwei Werkzeuge 7, 8, die in standardisierten Werkzeughaltern 9 aufgenommen sind. Die Werkzeughalter 9 sind mit einer Kodierung versehen und befinden sich in Transportgondeln 10. Jede Transportgondel 10 nimmt ein einziges Werkzeug auf. Die Transportgondeln 10 sind wiederum mit einer Kennzeichnung 11 versehen. Über die Kennzeichnung 11 der Transportgondel 10 ist eine Identifizierung der jeweiligen Transportgondel 10 möglich. Ein computergestütztes System ordnet die Kennzeichnung der Werkzeughalter 9 der entsprechenden Transportgondel 10 zu. Somit kann über die Identifikation der Transportgondel 10 festgestellt werden, welches Werkzeug 7, 8 sich in den jeweiligen Transportgondeln 10 befindet.

Mehrere dieser Transportgondeln 10 werden zu einem Zug 12 zusammengefasst. Auch ein solcher Zug 12 ist mit einer Kennzeichnung versehen. Das rechnergestützte System erkennt über die Kennzeichnung des Zuges 12, aus welchen Transportgondeln 10 der Zug 12 zusammengesetzt ist und in Folge dessen, welche Werkzeuge 7, 8 in einem Zug 12 mitgeführt werden.

Die einzelnen Transportgondeln 10 bzw. Züge 12 besitzen bei dieser Ausführungsform keinen eigenen Antrieb, sondern werden über ortsfest installierte Reibradantriebe angetrieben. Beispielsweise kann ein solcher Reibradantrieb aus einem Rollenpaar bestehen, dessen Reibrollen gegenüberliegend an der Transporteinrichtung 4 angeordnet sind. Wenn ein Zug 12 das Rollenpaar des Reibrollenantriebs passiert, gelangen die Reibrollen in Kontakt mit einer entsprechenden Angriffsfläche an dem Zug 12, so dass der Zug 12 entlang der Transporteinrichtung 4 vorangetrieben wird, bis dieser mit einem weiteren Reibrollenantrieb in Eingriff gelangt. Daher ist der Abstand der einzelnen Reibrollenantriebe in diesem Fall kleiner als die Zuglänge. Im Falle eines Kreisförderers ist es ebenfalls denkbar, mehrere separat angetriebene Abschnitte vorzusehen, die in Abhängigkeit von der Position eines Zuges oder einer Transportgondel ein- oder ausgeschaltet werden.

Figur 5 zeigt in einer vergrößerten Ansicht von oben einen Teilbereich einer Übergabestation 5. Es ist zu erkennen, dass die Übergabestation 5 Speicherelemente 15 umfasst, in welchen mehrere Werkzeuge 7, 8 gespeichert werden können, bis ein Maschinenführer die Werkzeuge abholt bzw. bis die als Lift 6 ausgeführte Handhabungsvorrichtung die Werkzeuge zurück in die Transporteinrichtung 4 überführt. An der Übergabestation 5 ist ein Bedienterminal 13 vorgesehen.

Figur 6 zeigt in vergrößerter Darstellung den Arbeitsplatz im Werkzeugmagazin 3. An einem Terminal 13 erfährt ein Werkzeugbauer im Werkzeugmagazin 3, dass an einer bestimmten Werkzeugmaschine 2 Werkzeuge 7, 8 benötigt werden. Die erforderlichen Werkzeuge 7, 8 werden von dem Werkzeugbauer vorbereitet und zusammengestellt. Über den als Handhabungsvorrichtung dienenden Lift 6 werden die Werkzeuge 7, 8 an eine Transportgondel 10 übergeben (Figur 3). Mehrere dieser Transportgondeln 10 können nunmehr unmittelbar zu einer der Übergabestationen 5 geleitet werden. Alternativ kann der Zug 12 in einem Zwischenspeicher 14 (Figur 1) bereitgestellt werden, bis die Werkzeuge in dem jeweiligen Produktionsbereich von dem Maschinenführer angefordert werden. Anhand der Figur 6 ist zu erkennen, dass zwei Lifte 6 vorgesehen sind. Der in der Bildebene obere Lift 6 dient dazu, vorbereitete Werkzeuge 7, 8 für einen neuen Auftrag an die Transporteinrichtung 4 zu übergeben. Der in der Bildebene untere Lift 6 dient dazu gebrauchte Werkzeuge 7, 8 aus den Transportgondeln 10 der Transporteinrichtung 4 zu entnehmen und dem Werkzeugbauer im Werkzeugmagazin 3 wieder zur Verfügung zu stellen.

Der Zwischenspeicher 14 besitzt eine Reihe von parallel geführten Gleisen, um eine entsprechende Anzahl von Zügen 12 bevorraten zu können. In gleicher Weise ist im Bereich der Übergabestation 5 jeweils ein Bypass vorgesehen, um Züge 12 durchfahren zu lassen, die die jeweilige Übergabestation 5 nicht anfahren müssen.

### Bezugszeichen:

1 - Produktionsbetrieb
2 - Werkzeugmaschine
3 - Werkzeugmagazin
4 - Transporteinrichtung
5 - Übergabestation
6- Lift
7 - Werkzeug
8 - Werkzeug
9 - Werkzeughalter
10 - Transportgondel
11 - Kennzeichnung
12 - Zug
13 - Terminal
14 - Zwischenspeicher
15 - Speicherelement

## Patentansprüche

1. Vorrichtung zur Beförderung von Werkzeugen (7, 8) und Prüfmitteln von Werkzeugmaschinen (2), welche über eine zentrale Recheneinheit ansteuerbar ist, umfassend wenigstens eine Übergabestation (5) sowie eine Transporteinrichtung (4), wobei die Transporteinrichtung (4) als Hängeschienensystem ausgeführt ist, an welchem mehrere Transportgondeln (10) einen Zug (12) bilden, welcher mit einer Kennzeichnung versehen ist, wobei die Transportgondeln (10) zur Aufnahme, Beförderung und Bevorratung von Werkzeugen (7, 8) oder Prüfmitteln an einer Laufschiene angeordnet sind.

2. Vorrichtung nach Anspruch 1, **dadurch gekennzeichnet, dass** die Werkzeuge (7, 8) in Werkzeughaltern (9) angeordnet sind, wobei die Werkzeughalter (9) mit einer Kennzeichnung versehen sind.

3. Vorrichtung nach Anspruch 2, **dadurch gekennzeichnet, dass** die Werkzeughalter (9) in den Transportgondeln (10) angeordnet sind, wobei die Transportgondeln (10) mit einer Kennzeichnung versehen sind.

4. Vorrichtung nach einem der Ansprüche 1 bis 3, **dadurch gekennzeichnet, dass** der Antrieb der Transporteinrichtung (4) ein Reibrollenantrieb oder ein Kettenantrieb ist.

5. Vorrichtung nach einem der Ansprüche 1 bis 3, **dadurch gekennzeichnet, dass** das Hängschienensystem als Kreisförderer ausgebildet ist.

6. Vorrichtung nach einem der Ansprüche 1 bis 3, **dadurch gekennzeichnet, dass** das Hängschienensystem als Power & Free-System ausgebildet ist.

7. Vorrichtung nach einem der Ansprüche 1 bis 3, **dadurch gekennzeichnet, dass** das Hängeschienensystem als Elektrohängebahn mit Zügen (12) ausgebildet ist.

8. Vorrichtung nach einem der Ansprüche 1 bis 7, **dadurch gekennzeichnet, dass** die Kennzeichnung der Werkzeughalter (9), der Transportgondeln (10) und der Züge (12) ein Code, eine Nummer oder eine Radio-Frequenz-Identifikation (RFID) ist.

9. Vorrichtung nach einem der Ansprüche 1 bis 8, **dadurch gekennzeichnet, dass** an der Übergabestation (5) ein Terminal (13) angeordnet ist, welches mit der zentralen Recheneinheit verbunden ist.

10. Vorrichtung nach einem der Ansprüche 1 bis 9, **dadurch gekennzeichnet, dass** an der Übergabestation (5) eine Handhabungseinheit in Form eines Lifts (6) vorgesehen ist.

11. Vorrichtung nach einem der Ansprüche 1 bis 10, **dadurch gekennzeichnet, dass** das Hängeschienensystem an einer Übergabestation (5) eine zweite Laufschiene als Bypass aufweist.

12. Vorrichtung nach einem der Ansprüche 1 bis 11, **dadurch gekennzeichnet, dass** Mittel vorgesehen sind, mit welchen Werkzeughalter (9) von einer Transportgondel (10) auf eine andere Transportgondel (19) übergeben werden.

13. Vorrichtung nach einem der Ansprüche 1 bis 12, **dadurch gekennzeichnet, dass** ein Zwischenspeicher (14) für Transportgondeln (10) und/oder Züge (12) vorgesehen ist, wobei der Zwischenspeicher (12) von dem Hängeschienensystem gebildet wird.

14. Verfahren zur Beförderung von Werkzeugen (7, 8) und Prüfmitteln von Werkzeugmaschinen (2) umfassend folgende Schritte:
a) Bestückung eines Werkzeughalters (9) mit Werkzeugen (7, 8) oder Prüfmitteln und Verknüpfen eines Kennzeichens des Werkzeughalters (9) mit dem Werkzeug (7, 8) oder Prüfmittel in einer zentralen Recheneinheit,
b) Bestückung einer Transportgondel (10) mit den Werkzeughaltern (9) an einer Übergabestation (5) und Verknüpfen eines Kennzeichens (11) der Transportgondel (10) mit dem Kennzeichen des Werkzeughalters (9) oder des Werkzeugs (7, 8) in der zentralen Recheneinheit,
c) Zusammenfassen mehrerer Transportgondeln (10) zu einem Zug (12) und Verknüpfen eines Kennzeichens des Zugs (12) mit dem Kennzeichen (11) der Transportgondel (10) in der zentralen Recheneinheit,
d) Beförderung des Zugs (12) an einer Laufschiene einer als Hängeschienensystem ausgeführten Transporteinrichtung (4) zu einer Übergabestation (5),
e) Entnahme der Werkzeuge (7, 8) oder Prüfmittel und
f) Beförderung der Transportgondel (10) über die Transporteinrichtung (4) zurück zur Übergabestation (5).

15. Verfahren nach Anspruch 14, **dadurch gekennzeichnet, dass** ein Zug (12) oder eine Transportgondel (10) über einen Reibrollenantrieb oder einen Kettenantrieb angetrieben wird.

16. Verfahren nach einem der Ansprüche 14 oder 15, **dadurch gekennzeichnet, dass** die Züge (12) in einem Zwischenspeicher (14) geparkt werden.

17. Verfahren nach einem der Ansprüche 14 bis 16, **dadurch gekennzeichnet, dass** ein Transport der Züge (12) über die zentrale Recheneinheit gesteuert wird.

18. Verfahren nach einem der Ansprüche 14 bis 17, **dadurch gekennzeichnet, dass** an jeder Übergabestation (5) ein mit der zentralen Recheneinheit verbundenes Terminal (13) angeordnet ist, über welches ein Benutzer Werkzeuge (7, 8) oder Prüfmittel anfordern kann.

19. Verfahren nach einem der Ansprüche 14 bis 18, **dadurch gekennzeichnet, dass** ein Werkzeug (7, 8) oder Prüfmittel an einer Übergabestation (5) mittels einer als Lift (6) ausgeführten Handhabungseinrichtung aus einem Zug (12) entnommen oder zum Zug (12) befördert wird.

20. Verfahren nach einem der Ansprüche 14 bis 19, **dadurch gekennzeichnet, dass** Werkzeuge (7, 8) und oder Werkzeughalter (9) mittels Handhabungsgeräten zwischen Zügen (12) oder Transportgondeln (10) ausgetauscht werden.

## Claims

1. A device for transporting tools (7, 8) and inspection equipment of machine tools (2) which can be controlled by a central processing unit, comprising at least one transfer station (5) as well as one transport unit (4), with the transport unit (4) being constructed as a suspension rail system on which a plurality of transport gondolas (10) form a train (12) which is provided with an identification, the transport gondolas (10) being arranged in a running rail for receiving, transporting and storing tools (7, 8) or inspection equipment.

2. A device according to claim 1 wherein the tools (7, 8) are arranged in toolholders (9), with the toolholders (9) being provided with an identification.

3. A device according to claim 2 wherein the toolholders (9) are arranged in the transport gondolas (10), with the transport gondolas (10) being provided with an identification.

4. A device according to any one of claims 1 to 3 wherein the drive of the transport unit (4) is a friction roller drive or a chain drive.

5. A device according to any one of claims 1 to 3 wherein the suspension rail system is configured as a circular conveyor.

6. A device according to any one of claims 1 to 3 wherein the suspension rail system is configured as a power and free system.

7. A device according to any one of claims 1 to 3 wherein the suspension rail system is configured as an electric suspension track with trains (12).

8. A device according to any one of claims 1 to 7 wherein the identification of the toolholders (9), of the transport gondolas (10) and of the trains (12) is a code, a number or a radio-frequency identification (RFID).

9. A device according to any one of claims 1 to 8 wherein a terminal (13) which is connected to the central processing unit is arranged at the transfer station (5).

10. A device according to any one of claims 1 to 9 wherein a handling unit in the form of a lift (6) is provided at the transfer station (5).

11. A device according to any one of claims 1 to 10 wherein the suspension rail system exhibits a second running rail as bypass at a transfer station (5).

12. A device according to any one of claims 1 to 11 wherein means are provided by which toolholders (9) are transferred from one transport gondola (10) to another transport gondola (19).

13. A device according to any one of claims 1 to 12 wherein a buffer store (14) for transport gondolas (10) and/or trains (12) is provided, with the buffer store (12) being formed by the suspension rail system.

14. A method for transporting tools (7, 8) and inspection equipment of machine tools (2) comprising the following steps:
a) Mounting tools (7, 8) or inspection equipment on a toolholder (9) and linking of an identifier of the toolholder (9) with the tool (7, 8) or inspection equipment in a central processing unit,
b) Mounting the toolholders (9) on a transport gondola (10) at a transfer station (5) and linking of an identifier (11) of the transport gondola (10) with the identifier of the toolholder (9) or of the tool (7, 8) in the central processing unit,
c) Combining a plurality of transport gondolas (10) into a train (12) and linking of an identifier of the train (12) with the identifier (11) of the transport gondola (10) in the central processing unit,
d) Transporting of the train (12) to a transfer station (5) on a running rail of a transport unit (4) constructed as a suspension rail system,
e) Removing of the tools (7, 8) or inspection equipment and
f) Transporting of the transport gondola (10) by the transport unit (4) back to the transfer station (5).

15. A method according to claim 14 wherein a train (12) or a transport gondola (10) is driven by a friction roller drive or a chain drive.

16. A method according to any one of claims 14 or 15 wherein the trains (12) are parked in a buffer store (14).

17. A method according to any one of claims 14 to 16 wherein a transport of the trains (12) is controlled by the central processing unit.

18. A method according to any one of claims 14 to 17 wherein a terminal (13) connected to the central processing unit and by which a user can request (7, 8) or inspection equipment is disposed at each transfer station (5).

19. A method according to any one of claims 14 to 18 wherein a tool (7, 8) or inspection equipment is removed from a train (12) or conveyed to the train (12) at a transfer station (5) by means of a handling unit constructed as a lift (6).

20. A method according to any one of claims 14 to 19 wherein tools (7, 8) and or toolholders (9) are interchanged between trains (12) or transport gondolas (10) by means of handling devices.

## Revendications

1. Dispositif de convoyage d'outils (7, 8) et de moyens de contrôle de machines-outils (2), pouvant être activé par l'intermédiaire d'une unité centrale de calcul et comprenant au moins un poste de transfert (5), ainsi qu'un dispositif de transport (4), ledit dispositif de transport (4) étant réalisé sous la forme d'un système à rail suspendu sur lequel plusieurs gondoles de transport (10) forment une rame (12) munie d'un marquage, lesdites gondoles de transport (10) étant disposées sur un rail de roulement en vue de la réception, du convoyage et du stockage d'outils (7, 8) ou de moyens de contrôle.

2. Dispositif selon la revendication 1, **caractérisé par le fait que** les outils (7, 8) sont logés dans des porte-outils (9), lesdits porte-outils (9) étant dotés d'un marquage.

3. Dispositif selon la revendication 2, **caractérisé par le fait que** les porte-outils (9) sont situés dans les gondoles de transport (10), lesdites gondoles de transport (10) étant pourvues d'un marquage.

4. Dispositif selon l'une des revendications 1 à 3, **caractérisé par le fait que** l'entraînement du dispositif de transport (4) est un entraînement par rouleaux de friction ou un entraînement par chaîne.

5. Dispositif selon l'une des revendications 1 à 3, **caractérisé par le fait que** le système à rail suspendu est réalisé sous la forme d'un convoyeur circulaire.

6. Dispositif selon l'une des revendications 1 à 3, **caractérisé par le fait que** le système à rail suspendu est réalisé sous la forme d'un système double voie (Power & Free).

7. Dispositif selon l'une des revendications 1 à 3, **caractérisé par le fait que** le système à rail suspendu est réalisé sous la forme d'une piste électrique en suspension, munie de rames (12).

8. Dispositif selon l'une des revendications 1 à 7, **caractérisé par le fait que** le marquage des porte-outils (9), des gondoles de transport (10) et des rames (12) est un code, un numéro ou une identification par radiofréquence (RFID).

9. Dispositif selon l'une des revendications 1 à 8, **caractérisé par le fait qu'**un terminal (13), installé au poste de transfert (5), est connecté à l'unité centrale de calcul.

10. Dispositif selon l'une des revendications 1 à 9, **caractérisé par le fait qu'**une unité de manutention, revêtant la forme d'un élévateur (6), est prévue au poste de transfert (5).

11. Dispositif selon l'une des revendications 1 à 10, **caractérisé par le fait que** le système à rail suspendu est équipé, à un poste de transfert (5), d'un second rail de roulement constituant une dérivation (en tant que By-pass).

12. Dispositif selon l'une des revendications 1 à 11, **caractérisé par** la présence de moyens à l'aide desquels des porte-outils (9) sont transférés d'une gondole de transport (10) à une autre gondole de transport (10).

13. Dispositif selon l'une des revendications 1 à 12, **caractérisé par** la présence d'un magasin intermédiaire (14) affecté à des gondoles de transport (10) et/ou à des rames (12), ledit magasin intermédiaire (14) étant constitué par le système à rail suspendu.

14. Procédé de convoyage d'outils (7, 8) et de moyens de contrôle de machines-outils (2), comprenant les étapes suivantes :
a) garnissage d'un porte-outils (9) par des outils (7, 8) ou par des moyens de contrôle et combinaison logique, dans une unité centrale de calcul, d'un marquage dudit porte-outils (9) avec l'outil (7, 8) ou le moyen de contrôle,
b) garnissage d'une gondole de transport (10) par les porte-outils (9) à un poste de transfert (5) et combinaison logique, dans l'unité centrale de calcul, d'un marquage (11) de ladite gondole de transport (10) avec le marquage du porte-outil (9) ou de l'outil (7, 8),
c) regroupement de plusieurs gondoles de transport (10) en une rame (12) et combinaison logique, dans l'unité centrale de calcul, d'un marquage de ladite rame (12) avec le repérage caractéristique (11) de la gondole de transport (10),
d) convoyage de la rame (12) vers un poste de transfert (5), sur un rail de roulement d'un dispositif de transport (4) réalisé sous la forme d'un système à rail suspendu,
e) prélèvement des outils (7, 8) ou des moyens de contrôle, et
f) convoyage de retour de ladite gondole de transport (10) vers ledit poste de transfert (5), par l'intermédiaire dudit dispositif de transport (4).

15. Procédé selon la revendication 14, **caractérisé par le fait qu'**une rame (12) ou une gondole de transport (10) est entraînée à l'aide d'un entraînement par rouleaux de friction, ou d'un entraînement par chaîne.

16. Procédé selon l'une des revendications 14 ou 15, **caractérisé par le fait que** les rames (12) sont stationnées dans un magasin intermédiaire (14).

17. Procédé selon l'une des revendications 14 à 16, **caractérisé par le fait qu'**un transport des rames (12) est commandé par l'intermédiaire de l'unité centrale de calcul.

18. Procédé selon l'une des revendications 14 à 17, **caractérisé par le fait qu'**un terminal (13), connecté à l'unité centrale de calcul et par l'intermédiaire duquel un utilisateur peut amener des outils (7, 8) ou des moyens de contrôle, est installé à chaque poste de transfert (5).

19. Procédé selon l'une des revendications 14 à 18, **caractérisé par le fait qu'**un outil (7, 8) ou un moyen de contrôle est prélevé d'une rame (12) ou acheminé vers ladite rame (12), à un poste de transfert (5), au moyen d'une unité de manutention réalisée sous la forme d'un élévateur (6).

20. Procédé selon l'une des revendications 14 à 19, **caractérisé par le fait que** des outils (7, 8) et/ou des porte-outils (9) sont permutés entre des rames (12) ou des gondoles de transport (10), au moyen d'appareils de manutention.
